# EUROPEAN PATENT APPLICATION

(11) **EP 2 106 133 A1**
(43) Date of publication of application: **30.09.2009**
(21) Application number: 08021745.8
(22) Date of filing: 15.12.2008
(51) Int. Cl.: H04N 5/76, H04N 5/765, H04N 5/782, H04N 5/44

(54) **Program recording apparatus**

(30) Priority: 28.03.2008 JP 2008087474
(71) Applicant: Kabushiki Kaisha Toshiba, Minato-ku Tokyo (JP)
(72) Inventor: Yamanashi, Naoki, Minato-ku Tokyo (JP)
(74) Representative: HOFFMANN EITLE

(57) **Abstract**

A program recording apparatus includes: a determination module that is configured to receive a ground-wave digital broadcast and determine whether a first broadcast for a mobile receiver is a simultaneous broadcast of a second broadcast for a non-portable receiver; and a recording control module that is configured to record first program data of the first broadcast and second program data of the second broadcast in a storage device when the determination module determines that the first broadcast is the simultaneous broadcast of the second broadcast.

## Description

### CROSS REFERENCE TO RELATED APPLICATION(S)

The present disclosure relates to the subject matters contained in Japanese Patent Application No. 2008-087474 filed on March 28, 2008, which are incorporated herein by reference in its entirety.

### FIELD

The present invention relates to a program recording apparatus for recording program data that is transmitted by ground-wave digital broadcast.

### BACKGROUND

Since a ground-wave digital broadcast and a satellite digital broadcast, such as a broadcasting satellite (BS) broadcast and a 110 degrees communications satellite (CS) broadcast, have been in practical use, program recording apparatus that records program data transmitted by the digital broadcast have become extensively used.

In the ground-wave digital broadcast employed in Japan, each channel is divided into 13 segments, whereby its bandwidth can be used on a segment-by-segment basis. In multi-channel broadcast, broadcast for mobile receivers is performed by using a single segment (channel) (hereinafter referred to as "one-segment broadcast" ("one seg." in short)) and one-channel high-vision broadcast or standard-image-quality broadcast (SDTV) of three channels is performed by using the remaining 12 segments.

An example of the conventional program recording apparatus for recording program data transmitted by digital broadcast is disclosed in JP-A-2007-251803. In this program recording apparatus, program data of a broadcast program for mobile receives (program data for mobile apparatus) and program data of a broadcast program for non-portable receivers (program data for stationary apparatus) are separated from received program data, whereby both program data can be recorded on a recording medium simultaneously.

However, even if program data for mobile apparatus and program data for stationary apparatus are separated from received program and both program data are recorded on a recording medium as in the above conventional technique, it is not always the case that the two recorded program data are of the same program. Therefore, in the conventional technique, there may occur an event that when a program is reproduced by a mobile receiver by using program data for mobile receivers, it is not the same as a program of broadcast for non-portable receivers.

### SUMMARY

One of objects of the present invention is to provide a program recording apparatus which can reliably record a program of a broadcast for mobile receivers which is the same as a program of a broadcast for non-portable receivers.

According to one aspect of the present invention, there is provided a program recording apparatus including: a determination module that is configured to receive a ground-wave digital broadcast and determine whether a first broadcast for a mobile receiver is a simultaneous broadcast of a second broadcast for a non-portable receiver; and a recording control module that is configured to record first program data of the first broadcast and second program data of the second broadcast in a storage device when the determination module determines that the first broadcast is the simultaneous broadcast of the second broadcast.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.
Fig. 1 is a block diagram showing a configuration of a program recording apparatus according to an embodiment of the present invention.
Fig. 2 is a flowchart showing an operation procedure of a simultaneous recording process for a mobile program.
Fig. 3 is a flowchart showing the operation procedure of another simultaneous recording process for a mobile program.
Figs. 4A and 4B show examples of a recording setting screen, wherein Fig. 4A shows a case where 1-segment recording is necessary, and wherein Fig. 4B shows a case where 1-segment recording is not necessary.
Fig. 5 is a flowchart showing the operation procedure of a correlating process.
Fig. 6 is a flowchart showing the operation procedure of a program list display process.
Fig. 7 is a flowchart showing the operation procedure of another program list display process.
Fig. 8 shows example of file names.
Fig. 9 shows an example of a program list of 12-segment broadcast.
Fig. 10 shows an example of a program list of 1-segment broadcast.
Fig. 11 shows an example of a remote controller.
Fig. 12 illustrates a set of example of transitions between screens.
Fig. 13 illustrates another set of example of transitions between screens.
Fig. 14 shows an example of electronic program table which is displayed on an LCD panel by using EPG data.
Fig. 15 shows example of recorded program data.

### DETAILED DESCRIPTION OF THE EMBODIMENTS

Hereinafter, embodiments of the invention will be described. In the following description, the same or similar components will be referenced by the same reference numerals, and detailed description thereof will be omitted.

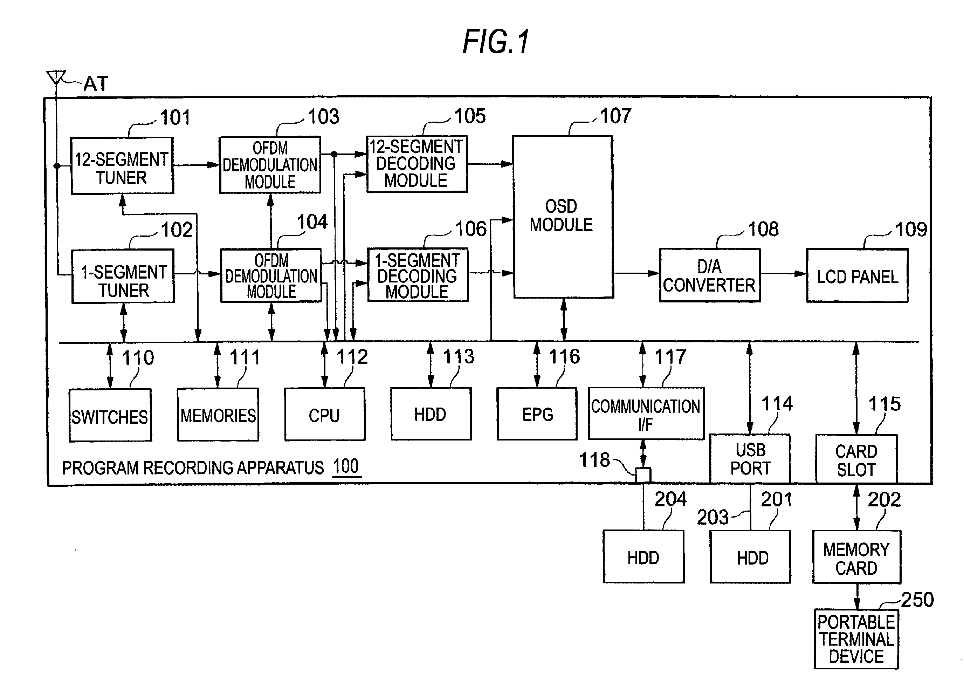

Fig. 1 is a block diagram showing a configuration of a program recording apparatus 100 according to the embodiment of the invention. The program recording apparatus 100 according to the embodiment is a non-portable receiver which is equipped with a display device for displaying video of a ground-wave digital broadcast program and a recording control module for controlling recording of the program.

The program recording apparatus 100 according to the embodiment is configured so as to receive programs of 1-segment broadcast which is broadcast for mobile receivers and programs of 12-segment broadcast which is broadcast for non-portable receivers.

As shown in Fig. 1, the program recording apparatus 100 is equipped with first and second digital tuners 101 and 102, first and second OFDM (orthogonal frequency division multiplexing) demodulation circuits 103 and 104, first and second decoding circuits 105 and 106, and an OSD circuit 107.

The program recording apparatus 100 is also equipped with a D/A converter 108, an LCD (liquid crystal display) panel 109, switches 110, and memories 111.

The program recording apparatus 100 is further equipped with a CPU 112, an HDD 113, a USB (universal serial bus) port 114, a card slot 115, an EPG decoder 116, a communication I/F 117, and a LAN terminal 118.

The first and second digital tuners 101 and 102 are supplied with broadcast waves that are received by a ground-wave digital broadcast antenna AT. Each of the digital tuners 101 and 102 performs reception processing of selectively receiving a signal component having a prescribed frequency corresponding to a specified channel from the broadcast waves supplied from the antenna AT, and outputs the received signal component to the corresponding one of the first and second OFDM demodulation circuits 103 and 104.

The first digital tuner 101 is a receiving module for receiving a broadcast wave of 12-segment broadcast, and the second digital tuner 102 is a receiving module for receiving a broadcast wave of 1-segment broadcast. The 12-segment broadcast is ground-wave digital broadcast which uses 12 segments of plural segments (13 segments) obtained by dividing one channel, and the 1-segment broadcast is ground-wave digital broadcast which uses one segment of the plural segments.

Each of the first and second OFDM demodulation circuits 103 and 104 generates program data (more specifically, a transport stream) by performing prescribed demodulation processing, error correction, and other processing on the signal component extracted by the corresponding one of the first and second digital tuners 101 and 102. The generated program data (transport stream) is input to the corresponding one of the first and second decoding circuits 105 and 106.

Each of the first and second decoding circuits 105 and 106 generates a digital video signal and a digital audio signal by performing decoding processing on the received transport stream. The first decoding circuit 105 is for 12-segment broadcast and the second decoding circuit 106 is for 1-segment broadcast.

The OSD circuit 107 superimposes an OSD (on-screen display) signal on the received digital video signal and outputs a resulting signal to the D/A converter 108. The OSD signal is generated by the CPU 112.

The D/A converter 108 converts the received digital video signal into an analog video signal and outputs the latter. The LCD panel 109 is a display device for displaying video of a program being viewed using the analog video signal.

The switches 110 include various operation switches, and the memories 111 include a RAM, a ROM, etc. Control programs and programs to be run by the CPU 112 are stored in the ROM. The RAM can provide a work area that is necessary when the CPU 112 runs a program.

The CPU 112 controls the modules described above according to the control programs stored in the memories 111 and controls video display, audio output, etc. in a unified manner. Furthermore, the CPU 112 functions as a recording control module for controlling simultaneous recording of a mobile program (described later) by operating according to a program recording program (described later). In performing simultaneous recording of a mobile program, the CPU 112 uses program data obtained through demodulation by the first and second OFDM demodulation circuits 103 and 104.

The HDD (hard disk drive) 113 functions as a storage device for recording, as ground-wave digital broadcast program data, data obtained through demodulation by the first and second OFDM demodulation circuits 103 and 104.

The connector of a USB cable 203 can be connected to the USB port 114. An HDD 201 for USB connection is connected to the USB port 114 via the USB cable 203.

A memory card 202 such as an SD (secure digital memory card) is inserted into the card slot 115. The card slot 115 writes and reads data to and from the inserted memory card 202. Program data for a portable terminal device 250 and other data are recorded in the memory card 202.

The portable terminal device 250 is a mobile receiver which enables viewing of ground-wave digital broadcast programs, such as a cell phone, a PDA (personal digital assistant), or a portable music player.

The EPG decoder 116 separates and extracts EPG data (described later) that is superimposed on program data obtained through demodulation by the first and second OFDM demodulation circuits 103 and 104.

The communication I/F 117 serves for information exchange with a device (e.g., a LAN-compatible HDD 204) that is connected to a LAN terminal 118.

The LAN terminal 118 is used as a general LAN-compatible port of an Ethernet. A device such as the LAN-compatible, external HDD 204 is connected to the LAN terminal 118, and the LAN terminal 118 serves for information exchange with that device.

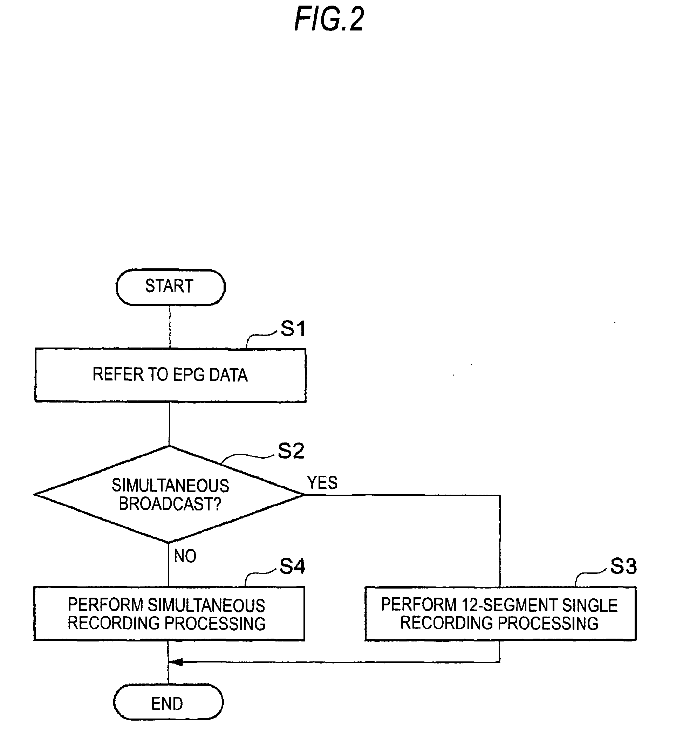

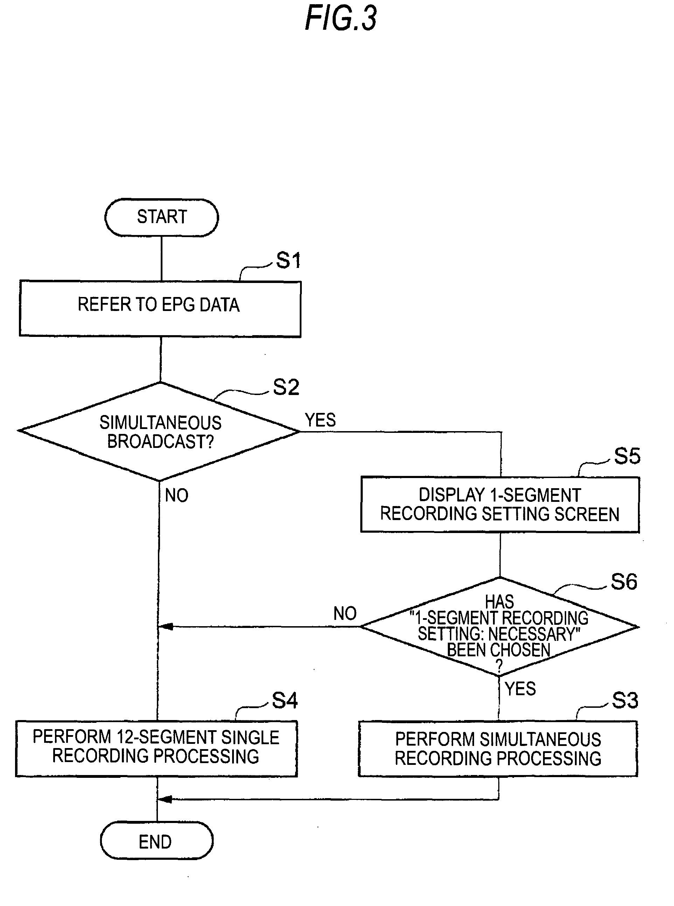

Next, simultaneous recording of a mobile program by the above-configured program recording apparatus 100 will be described with reference to Figs. 2 and 3. Fig. 2 is a flowchart showing the operation procedure of a simultaneous recording process for a mobile program which is executed by the CPU 112 according to a program recording program. Fig. 3 is a flowchart showing the operation procedure of another simultaneous recording process. The CPU 112 executes a simultaneous recording process for a mobile program by operating according to the flowchart of Fig. 2 or 3.

The simultaneous recording of a mobile program in the program recording apparatus 100 means recording a program for the portable terminal device 250 by recording, in the HDD 113, program data of a 1-segment broadcast program (hereinafter referred to as "1-segment program data") simultaneously with program data of a 12-segment broadcast program (hereinafter referred to as "12-segment program data") in the case where the 1-segment broadcast is a simultaneous broadcast of the 12-segment broadcast.

The CPU 112 executes the simultaneous recording process according to the flowchart of Fig. 2 or 3 when instructed to record a ground-wave digital broadcast program by a prescribed operation made by using one of the switches 110 or a remote controller 400 (described later).

Upon starting the simultaneous recording process, at step S1 the CPU 112 refers to EPG (electronic program guide) data of a 1-segment broadcast and EPG data of a 12-segment broadcast that are acquired from the EPG decoder 116.

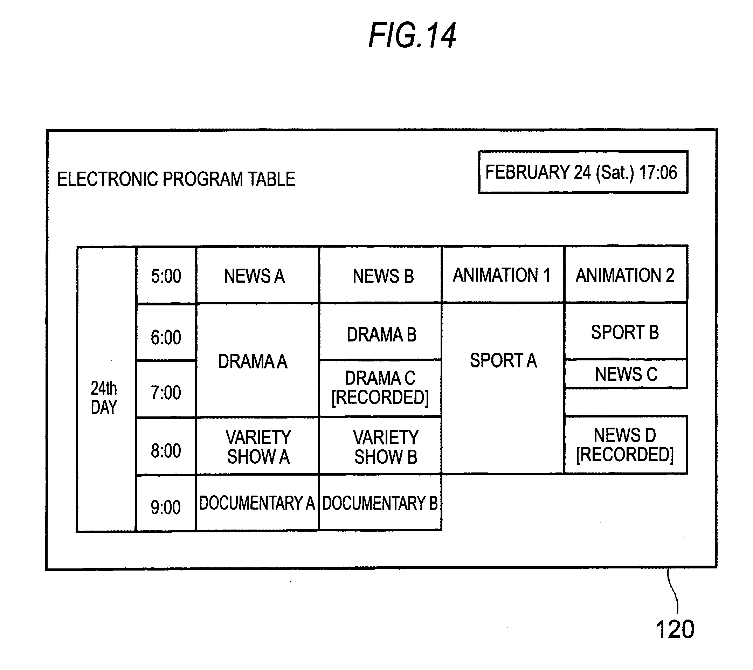

The EPG data is electronic program information. The program recording apparatus 100 can display an electronic program table 120 (e.g., one as shown in Fig. 14) on the LCD panel 109 by separating service information (SI; described later) from a broadcast signal and using EPG data that is included in the SI.

In digital broadcast, EPG data is superimposed on a broadcast signal as service information (SI). The SI includes information that is necessary for viewing of a digital broadcast program and an event information table (EIT), and the EIT includes EPG data.

For example, the EPG data includes a program name (program title), a program genre, a program start time, a program end time, program contents, and other data. At step S2 (described later), it can be determined whether the 1-segment broadcast is a simultaneous broadcast of the 12-segment broadcast by comparing their program name data.

At step S2, the CPU 112 performs a simultaneity determination as to whether the 1-segment broadcast is a simultaneous broadcast of the 12-segment broadcast by operating as a determination module, that is, comparing the EPG data of the 1-segment broadcast with that of the 12-segment broadcast.

For example, as described above, the CPU 112 performs a simultaneity determination on the basis of at least a result of a comparison between program name data. Alternatively, the CPU 112 may perform a simultaneity determination on the basis of at least one of a pair of program names, a pair of program genres, and a pair of broadcast times. If coincidence is found in all (three) of the program name, the program genre, and the broadcast time, the probability that the 1-segment broadcast is a simultaneous broadcast is high. Therefore, using program names, program genres, and broadcast times (three pairs of data) enables a correct simultaneity determination. The CPU 112 determines that the 1-segment broadcast is a simultaneous broadcast if program names, for example, coincide with each other completely. Alternatively, the CPU 112 may determine that the 1-segment broadcast is a simultaneous broadcast if program names, for example, coincide with each other with similarity of 90% or more, for example (partial coincidence).

If determined that the 1-segment broadcast is a simultaneous broadcast of the 12-segment broadcast, the CPU 112 proceeds to step S3. If determined that the 1-segment broadcast is not a simultaneous broadcast of the 12-segment broadcast, the CPU 112 proceeds to step S4.

At step S3, the CPU 112 performs simultaneous recording processing, that is, records, in the HDD 113, 12-segment program data and 1-segment program data of the 1-segment broadcast which has been determined a simultaneous broadcast of the 12-segment broadcast. In this example, the 12-segment program data and the 1-segment program data are recorded in the HDD 113 simultaneously (recording start times are set the same). Alternatively, for example, the recording start time of the 1-segment program data may be delayed a little from that of the 12-segment program data so that their recording end times become the same.

At step S4, the CPU 112 performs single recording processing, that is, records only the 12-segment program data in the HDD 113. Upon executing step S3 or S4, the CPU 112 finishes the simultaneous recording process for a mobile program.

When the program recording apparatus 100 has executed the simultaneous recording process for a mobile program in the above-described manner, 12-segment program data and 1-segment program data are automatically recorded in the HDD 113 if the 1-segment broadcast is a simultaneous broadcast of the 12-segment broadcast. In this case, since the 12-segment program data and the 1-segment program data which is program data of a simultaneous broadcast of the 12-segment broadcast are recorded in the HDD 113, the two program data are data of the same program. Therefore, in the program recording apparatus 100, the mobile program can be recorded in such a manner that the 12-segment program data and the 1-segment program data which is of the same program as the former are recorded reliably. Since high-rate program data and low-rate program data of the same program are retained, the two data can be used properly without re-encoding.

In this case, the same program as the 12-segment broadcast program can be viewed by using the portable terminal device 250 by, for example, moving only the 1-segment program data from the HDD 113 to the memory card 202 and inserting the memory card 202 into the portable terminal device 250.

Being larger in data size than 1-segment program data, 12-segment program data is not suitable for an operation of moving it to the memory card 202 and viewing it with the portable terminal device 250. On the other hand, 1-segment program data is not suitable for reproduction by the program recording apparatus 100 because it is lower in rate than 12-segment program data and the image quality is degraded if it is reproduced by the LCD panel 109 of the program recording apparatus 100. However, merely recording 12-segment program data and 1-segment program data simultaneously does not assure that program data of the same program are recorded.

In view of the above, in the program recording apparatus 100, a simultaneity determination is performed in the above-described manner and 12-segment program data and 1-segment program data are recorded in the HDD 113 simultaneously if the 1-segment program data is determined program data of a simultaneous broadcast of the 12-segment broadcast.

The flowchart of Fig. 3 is different from the flowchart of Fig. 2 in that steps S5 and S6 are inserted between steps S2 and S3/S4.

When proceeding to step S5 from step S2, the CPU 112 causes the LCD panel 109 to display a recording setting screen 300 (described later). At the next step S6, the CPU 112 determines whether "1-segment recording: necessary" has been chosen in the recording setting screen 300. The CPU 112 proceeds to step S3 if it has been chosen, and proceeds to step S4 if not. The other steps are the same as in Fig. 2.

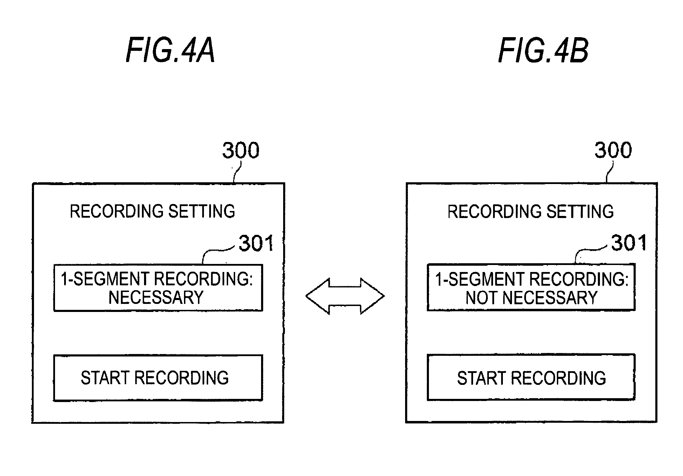

As shown in Fig. 4, the recording setting screen 300 has an input space 301 which allows a viewer to make an input as to the necessity of 1-segment recording. Fig. 4(a) shows a case that 1-segment recording is necessary and Fig. 4(b) shows a case that 1-segment recording is not necessary. If 1-segment recording is necessary, the process moves from step S6 to step S3. Therefore, if it is determined that the 1-segment broadcast is a simultaneous broadcast, the 1-segment program data and the 12-segment program data are recorded in the HDD 113 simultaneously.

As described above, where the simultaneous recording process for a mobile program is executed according to the flowchart of Fig. 3, a viewer can choose whether 1-segment recording is necessary or not. Simultaneous recording of the mobile program is performed or not performed according to a choice of the user.

Incidentally, if 12-segment program data and 1-segment program data that have been recorded by the simultaneous recording process for a mobile program are handled equally without being discriminated from each other, it is difficult to increase the ease of use of a viewer, because they are different in the apparatus suitable for reproduction.

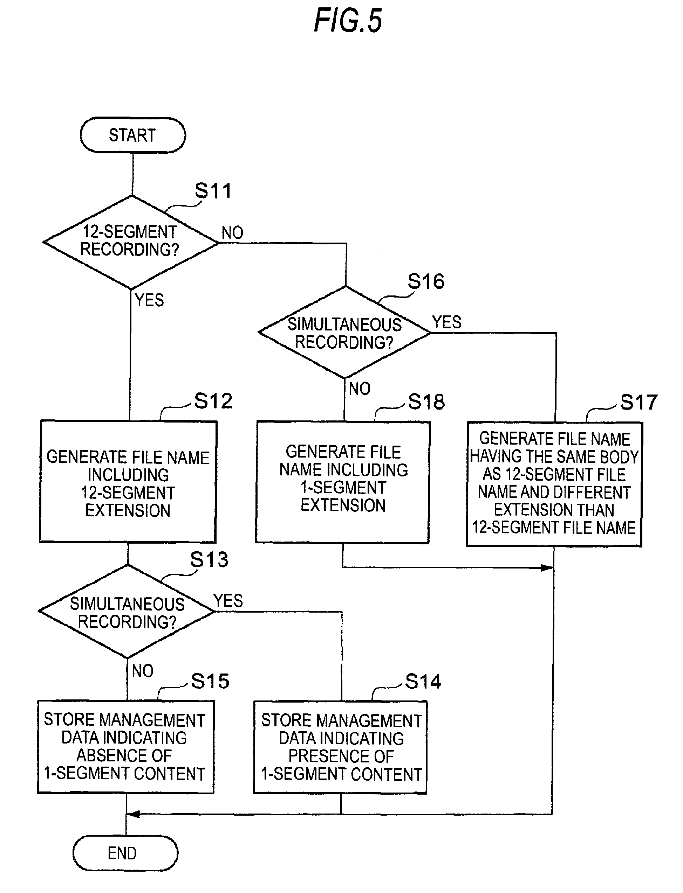

In view of this, the program recording apparatus 100 operates according to flowcharts of Figs. 5-7. In the program recording apparatus 100, the CPU 112 operates as a correlation module. The CPU 112 correlates 1-segment program data with 12-segment program data by generating, in the following manner, a file name of a 12-segment file (non-portable receiver file) to be used for recording 12-segment program data in the HDD 113 or a 1-segment file (mobile receiver file) to be used for recording 1-segment program data in the HDD 113.

In the case of simultaneous recording of a mobile program, 12-segment program data and 1-segment program data are correlated with each other by file names and recorded in the HDD 113.

Upon starting a correlating process according to the flowchart of Fig. 5, at step S11 the CPU 112 determines whether 12-segment recording (i.e., recording for 12-segment program data) should be performed. The CPU 112 proceeds to step S12 if 12-segment recording should be performed, and proceeds to step S16 if not. At step S12, the CPU 112 generates a file name of a 12-segment file. As described later, a file name consists of a basename (primary file name) and an extension (a character string for identification of a file type). At step S12, the CPU 112 generates an extension that is specific (dedicated) to the 12-segment broadcast.

At step S13, the CPU 112 determines whether to perform simultaneous recording processing (S3). The CPU 112 proceeds to step S14 if simultaneous recording processing should be performed, and proceeds to step S15 if not. At step S14, the CPU 112 stores data indicating that 1-segment program data is present (1-segment recording is necessary) in the HDD 113 as management data to be used for managing presence/absence of simultaneous broadcast 1-segment program data for 12-segment program data. At step S15, the CPU 112 stores data indicating that 1-segment recording is not necessary in the HDD 113 as management data. Then, the correlating process is finished. In executing step S14 or S15, the CPU 112 operates as a management data storing control module.

On the other hand, when proceeding to step S16 from step S11, the CPU 112 determines whether to perform simultaneous recording processing (S3) as at step S13. The CPU 112 proceeds to step S17 if simultaneous recording processing should be performed, and proceeds to step S18 if not. At step S17, the CPU 112 generates a file name of a 1-segment file. In this case, the CPU 112 generates a file name having the same basename as the file name of the corresponding 12-segment file and a different extension from the extension of the corresponding 12-segment file. At step S17, the CPU 112 generates an extension that is specific (dedicated) to the 1-segment broadcast.

At step S18, the CPU 112 generates a file name including a basename corresponding to a 1-segment broadcast program being recorded solely and an extension specific to the 1-segment broadcast. The correlating process is finished upon execution of step S17 or S18.

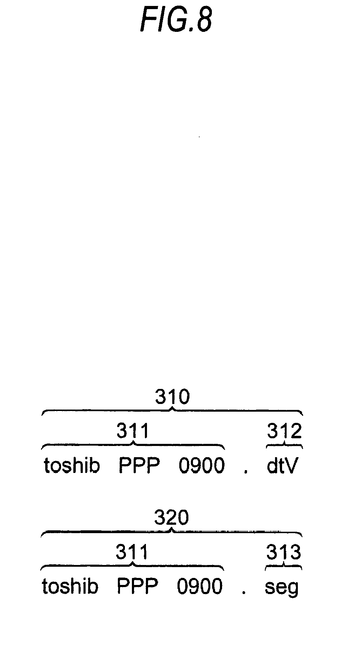

When simultaneous recording of a mobile program has been performed after execution of the above correlating process, a 12-segment file is given, for example, a file name 310 shown in Fig. 8 and a 1-segment file is given, for example, a file name 320 shown in Fig. 8. The file name 310 includes a basename 311 and an extension 312, and the file name 320 includes the basename 311 and an extension 313.

The file names 310 and 320 have the same basename 311 (in Fig. 8, "toshib PPP 0900"). The extension 312 is a character string specific to the 12-segment broadcast (e.g., "dtV" (see Fig. 8)), and the extension 313 is a character string specific to the 1-segment broadcast (e.g., "seg").

Since the file names 310 and 320 have the same basename 311 and are different from each other only in the extension, it is clear to a viewer that the 12-segment file and the 1-segment file are correlated with each other. Furthermore, the extensions 312 and 313 are character strings specific to the 12-segment broadcast and the 1-segment broadcast, respectively, it is apparent from the file name whether the program data is of a 12-segment broadcast or a 1-segment broadcast. A viewer can determine of which kind of broadcast the program data is, merely by seeing the file name.

In the program recording apparatus 100, since a 12-segment file and a 1-segment file are correlated with each other in the above-described manner, such an operation as moving or deleting the 12-segment file can be linked with a operation on the 1-segment file. This gives a user enhanced ease of use.

For example, when a transition is made from a screen of a 12-segment broadcast program list 350 (described later) to a screen of a 1-segment broadcast program list 360, the cursor is caused to point a program that is correlated with a program that was pointed by the cursor in the program list 350.

When a transition is made to a screen of the 1-segment broadcast program list 360 after an instruction to move or copy program data was made in the program list 350, program data that is correlated with the program data whose movement or copying was commanded in the program list 350 is moved or copied.

When a transition is made to a screen of the 1-segment broadcast program list 360 after an instruction to delete program data was made in the program list 350, program data that is correlated with the program data whose deletion was commanded in the program list 350 is deleted.

When a transition is made to a screen of the 1-segment broadcast program list 360 after an instruction to lock or unlock program data was made in the program list 350, program data that is correlated with the program data whose locking or unlocking was commanded in the program list 350 is locked or unlocked.

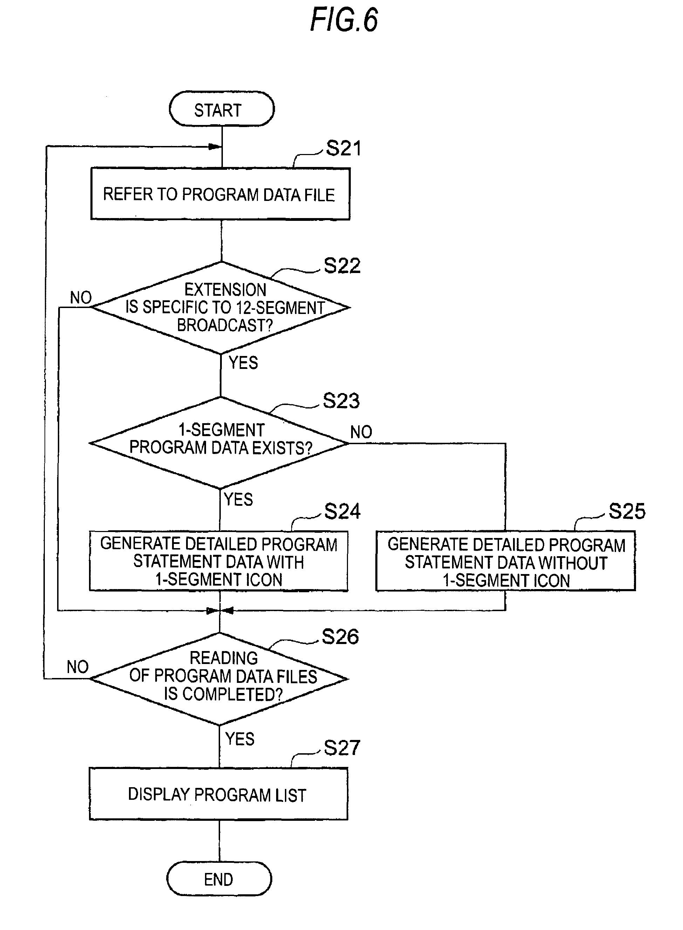

The program recording apparatus 100 can display a program list 350 by operating according to the flowchart of Fig. 6.

Upon starting a program list display process according to the flowchart of Fig. 6, at step S21 the CPU 112 refers to a program data file that is stored in the HDD 113. The program data file contains a 12-segment file or a 1-segment file. At step S22, the CPU 112 determines whether the extension of the file name of the referenced program data is the one specific to the 12-segment broadcast. The CPU proceeds to step S23 if the determination result is affirmative, and proceeds to step S26 if it is negative. In this manner, program data files whose extensions are the one specific to the 1-segment broadcast are prevented from being displayed in a program list 350.

At step S23, the CPU 112 determines whether the management data indicates that 1-segment program data is present or absent. The CPU 112 proceeds to step S24 if 1-segment program data is present, and proceeds to step S25 if not.

At step S24, the CPU 112 generates detailed program statement data including a 1-segment icon 351a (described later). At step S25, the CPU 112 generates detailed program statement data not including a 1-segment icon. At step S26, the CPU 112 determines whether the reading of program data files has completed. The CPU 112 proceeds to step S27 if the reading has completed, and returns to step S21 if not.

At step S27, the CPU 112 displays a program list 350 using the detailed program statement data that have been generated at steps S24 and S25. Then, the program list display process is finished. The program recording apparatus 100 has stored management data by executing steps S14 and S15. Those management data are referred to at step S23. In this manner, presence/absence of 1-segment program data can be determined more easily than in a case that all 12-segment data are referred to.

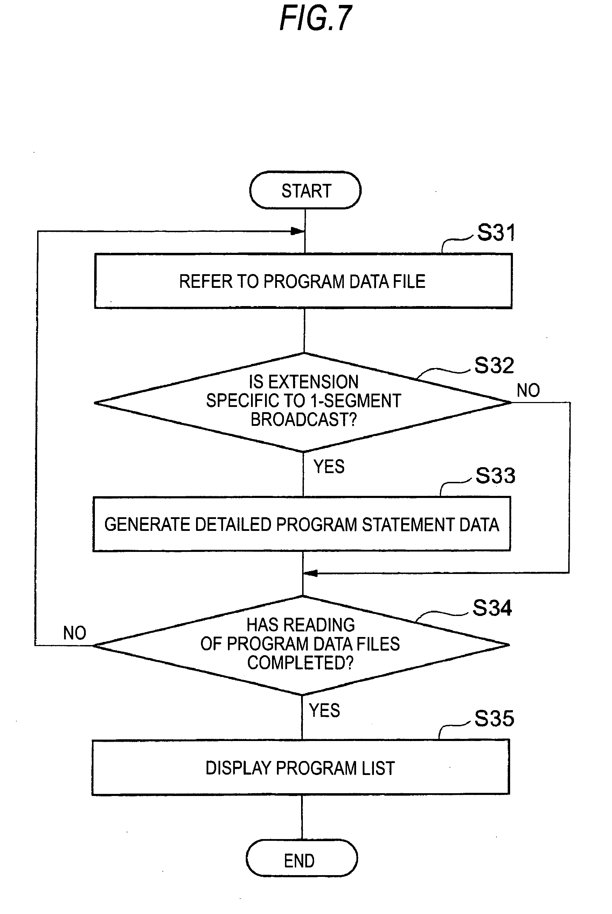

The program recording apparatus 100 can display a program list 360 by operating according to the flowchart of Fig. 7.

Upon starting a program list display process according to the flowchart of Fig. 7, at step S31 the CPU 112 refers to a program data file that is stored in the HDD 113. At the next step S32, the CPU 112 determines whether the extension of the file name of the referenced program data file is the one specific to the 1-segment broadcast. The CPU 112 proceeds to step S33 if the determination result is affirmative, and proceeds to step S34 if it is negative. In this manner, only program data files whose extensions are the one specific to the 1-segment broadcast are displayed in a program list 360.

At step S33, the CPU 112 generates detailed program statement data. At step S34, the CPU 112 determines whether the reading of program data files have completed. The CPU 112 proceeds to step S35 if the reading has completed, and return to step S31 if not.

At step S35, the CPU 112 displays a program list 360 using the detailed program statement data that have been generated at step S33. Then, the program list display process is finished.

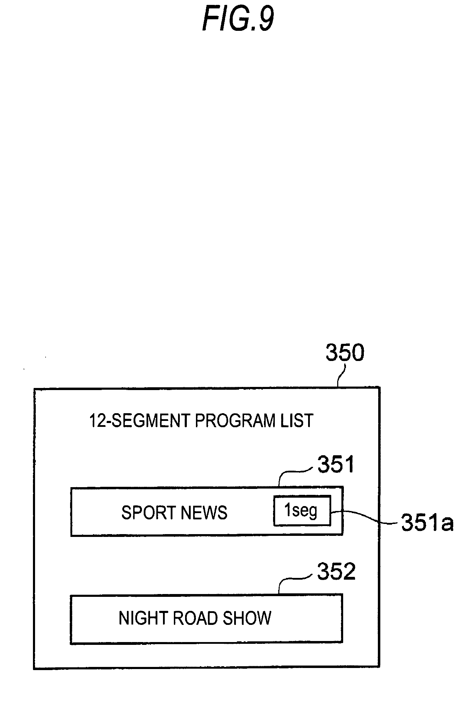

The program list 350 is a list of recorded programs of 12-segment broadcast and has, for example, detailed program statements 351 and 352 as shown in Fig. 9. The detailed program statement 351 has a 1-segment icon 351a. The 1-segment icon 351a indicates that simultaneous recording processing has been performed and, as a result, 1-segment program data which is program data of a simultaneous broadcast of a 12-segment broadcast is recorded in the HDD 113 in addition to the 12-segment program data. Therefore, the detailed program statement 351 corresponds to a file name of a 12-segment file that was stored through execution of the above-described steps S3 and S14. Since the detailed program statement 352 does not have a 1-segment icon, only 12-segment program data is recorded in the HDD 113 as corresponding program data. Therefore, the detailed program statement 352 corresponds to a file name of a 12-segment file that was stored through execution of the above-described steps S4 and S15.

As described above, a viewer can recognize whether 1-segment program data of the same program as 12-segment program data is stored in addition to the 12-segment program data or only the 12-segment program data is stored by checking whether a detailed program statement displayed in a program list 350 has a 1-segment icon 351a.

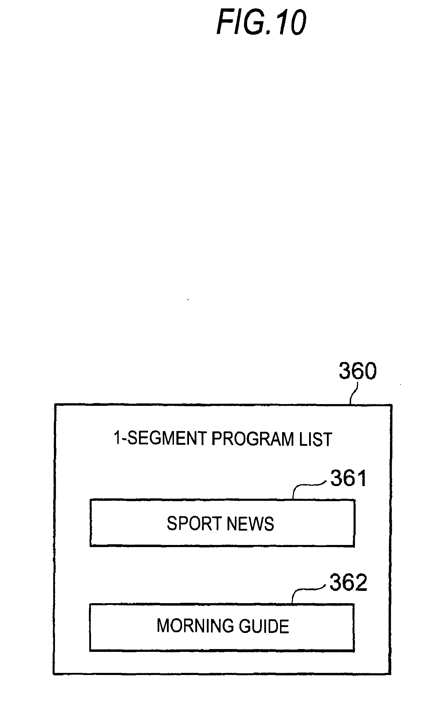

The program list 360 is a list of recorded programs of 1-segment broadcast and has, for example, detailed program statements 361 and 362 as shown in Fig. 10. The detailed program statement 361 has the same program name "Sport News" as the detailed program statement 351. Therefore, a viewer can recognize, from the program list 360, that 1-segment program data of the same program as 12-segment program data is recorded. The detailed program statement 361 corresponds to a file name of a 1-segment file that was stored through execution of the above-described steps S3 and S14. The detailed program statement 362 corresponds to a file name of a 1-segment file that was stored solely.

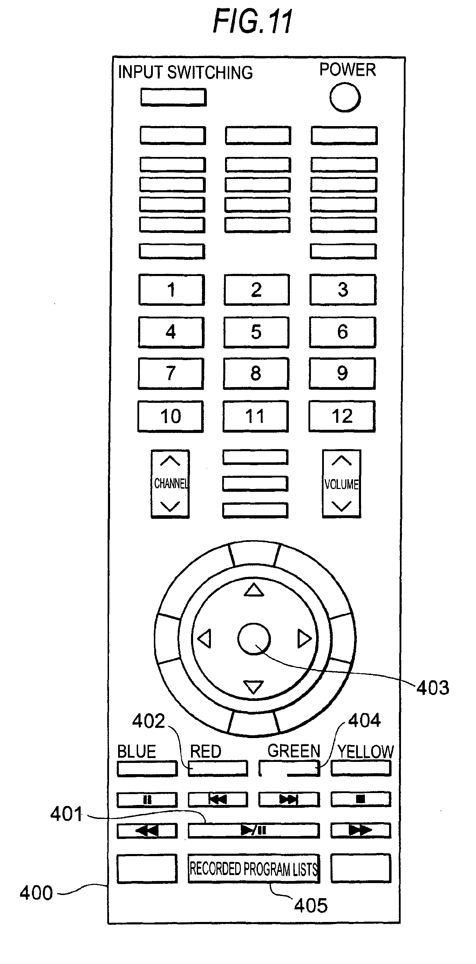

When a viewer places the cursor on the detailed program statement 351 or 352 in the program list 350 or the detailed program statement 361 or 362 in the program list 360 and presses a reproduction button 401 of a remote controller 400 shown in Fig. 11, the CPU 112 reads the corresponding program data from the HDD 113 and reproduces the recorded program.

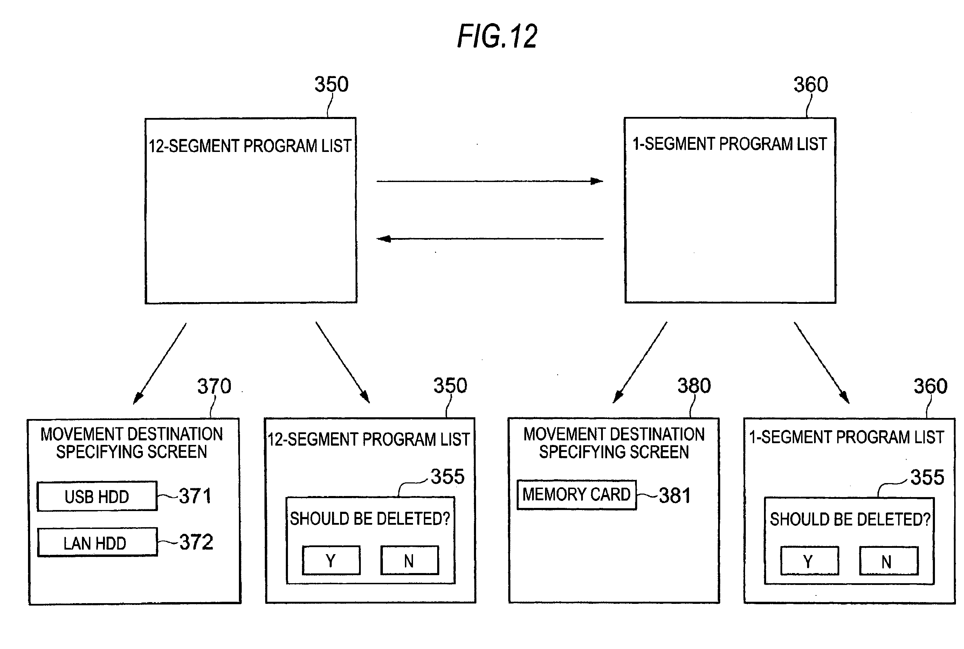

To delete recorded 12-segment program data, a viewer places the cursor on one of the detailed program statements 351 and 352 that corresponds to the 12-segment program data the viewer intends to delete and presses a deletion button 402 of the remote controller 400. In response, a deletion confirmation space 355 is displayed in the program list 350 (see Fig. 12). To delete the 12-segment program data, the viewer places the cursor on the box "Y" and presses an enter button 403. In response, the specified 12-segment program data is deleted. If the viewer does not want to delete any 12-segment program data, the viewer places the cursor on the box "N" and presses the enter button 403.

To move recorded 12-segment program data to another recording medium, the viewer places the cursor on one of the detailed program statements 351 and 352 that corresponds to the 12-segment program data the viewer intends to move and presses a movement button 404 of the remote controller 400. In response, a movement destination specifying screen 370 is displayed (see Fig. 12). Specification spaces 371 and 372 through which to designate the HDDs 201 and 204, respectively, as a movement destination candidate of the 12-segment program data are displayed in the movement destination specifying screen 370. This allows the viewer to choose one of the specification spaces 371 and 372 by placing the cursor on it. When the viewer chooses a movement destination, a movement confirmation space (not shown) is displayed in the program list 350. The viewer specifies whether to move the 12-segment program data through the movement confirmation space.

To delete recorded 1-segment program data, the viewer places the cursor on one of the detailed program statements 361 and 362 that corresponds to the 1-segment program data the viewer intends to delete and presses the deletion button 402 of the remote controller 400. In response, a deletion confirmation space 355 is displayed in the program list 350 (see Fig. 12). To delete the 1-segment program data, the viewer places the cursor on the box "Y" and presses the enter button 403. In response, the specified 12-segment program data is deleted. If the viewer does not want to delete any 1-segment program data, the viewer places the cursor on the box "N" and presses the enter button 403.

To move recorded 1-segment program data to another recording medium, the viewer places the cursor on one of the detailed program statements 361 and 362 that corresponds to the 1-segment program data the viewer intends to move and presses the movement button 404 of the remote controller 400. In response, a movement destination specifying screen 380 is displayed (see Fig. 12). A specification space 381 through which to designate the memory card 202 as a movement destination candidate of the 1-segment program data is displayed in the movement destination specifying screen 380. This allows the viewer to choose the memory card 202 as a movement destination of the 1-segment program data.

Fig. 12 illustrates how transitions are made between operation screens and the program lists 350 and 360 that are displayed in the program recording apparatus 100.

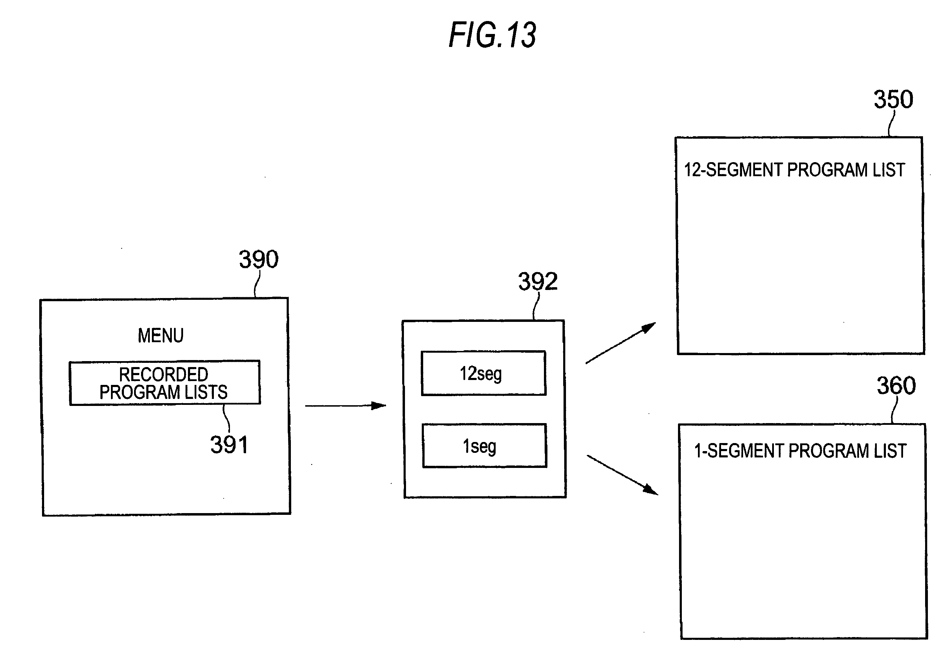

Furthermore, as shown in Fig. 13, a list choosing screen 392 is displayed if a recorded program lists button 391 is pressed in a state that a menu screen 390 is displayed. The program list 350 or 360 can be displayed by choosing one of items corresponding to 12-segment programs and 1-segment programs in the list choosing screen 392.

The program recording apparatus 100 is provided with a program data automatic deleting function. This is to automatically delete recorded program data when the data volume of recorded program data becomes larger than a data deletion threshold value. The program data automatic deleting function is realized by the CPU 112 when it operates as a deletion control module. When the data volume of program data that are recorded in the HDD 113 becomes larger than the data deletion threshold value, the CPU 112 deletes program data in order of recording until the data volume of recorded program data becomes smaller than the data deletion threshold value.

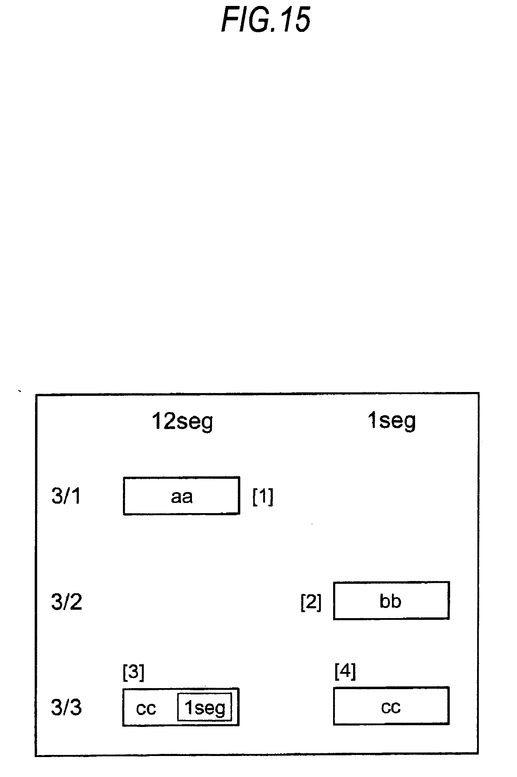

Where there are 12-segment program data and 1-segment program data that are correlated with each other, they have the same recording date and start time. In this case, the 12-segment program data is deleted with priority given to it over the 1-segment program data. This makes it possible to secure more free space in the HDD 113 because the 12-segment program data is larger in data volume than the 1-segment program data. Therefore, program data are recorded in the HDD 113 in a manner shown in Fig. 15, program data are deleted in order indicated by numerals [1], [2], [3], and [4] in Fig. 15. Twelve-segment program data was recorded on March 1, 1-segment program data was recorded on March 2, and 12-segment program data and 1-segment program data were recorded on March 3 in the HDD 113. The 12-segment program data and the 1-segment program data of March 3 are correlated with each other and have the same recording date. Therefore, the 12-segment program data is deleted with priority given to it.

The above embodiment is directed to the example TV receiver with a recording function which is equipped with the display device for displaying video of a ground-wave digital broadcast program and the recording control module for recording the program. However, the invention can also be applied to program recording apparatus having no display device, such as a DVD recorder and an HDD recorder.

The program recording apparatus 100 according to the above embodiment is equipped with the receiving module for receiving 1-segment broadcast programs and the receiving module for receiving 12-segment broadcast programs. However, the receiving module may be such as to be able to receive broadcast for mobile receivers and broadcast for non-portable receivers, that is, the program recording apparatus 100 may be equipped with receiving module for receiving broadcasts that are neither 1-segment broadcast nor 12-segment broadcast. For example, the program recording apparatus 100 may be equipped with receiving module for receiving broadcast for mobile receivers and broadcast for non-portable receivers in which the frequency bandwidth of one channel is not divided into segments.

As described above in detail, the invention can provide a program recording apparatus which can reliably record a program of a broadcast for mobile receivers which is the same as a program of a broadcast for non-portable receivers.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A program recording apparatus comprising:
a determination module that is configured to receive a ground-wave digital broadcast and determine whether a first broadcast for a mobile receiver is a simultaneous broadcast of a second broadcast for a non-portable receiver; and
a recording control module that is configured to record first program data of the first broadcast and second program data of the second broadcast in a storage device when the determination module determines that the first broadcast is the simultaneous broadcast of the second broadcast.

2. The apparatus according to claim 1, wherein the recording control module records the second program data except the first program data in the storage device when the determination module determines that the first broadcast is not the simultaneous broadcast of the second broadcast.

3. The apparatus according to claim 2 further comprising a correlation module that is configured to correlate the first program data that is determined to be a simultaneous broadcast by the determination module with the second program data,
wherein the recording control module records the first program data and the second program data in correlation with each other in the storage device.

4. The apparatus according to claim 3, wherein the correlation module performs the correlation by assigning a file name, which includes a basename and an extension for identifying a file type, to each of a first file for storing the first program data and a second file for storing the second program data, and
wherein the correlation module performs the correlation by respectively assigning a first file name and a second file name to the first program data and the second program data, the first file name and the second file name having the same basename and different extension.

5. The apparatus according to claim 4, wherein the correlation module employs a character string for the extension to be unique to each of the first broadcast and the second broadcast.

6. The apparatus according to claim 5 further comprising a management data recording module that is configured to store management data in the storage device, the management data indicating whether the first program data that has been correlated with the second program data is recorded in the storage device.

7. The apparatus according to claim 1 further comprising a display device that is configured to display video contained in the second broadcast.

8. The apparatus according to claim 1 further comprising a deletion control module that is configured to delete the second program data with priority over the first program data.
